# EUROPEAN PATENT APPLICATION

(11) **EP 1 061 761 A1**
(43) Date of publication of application: **20.12.2000**
(21) Application number: 99440145.3
(22) Date of filing: 18.06.1999
(51) Int. Cl.: H04Q 7/38, H04Q 3/66

(54) **Reducing the number of leased lines in a mobile communication network**

(71) Applicant: ALCATEL, 75008 Paris (FR)
(72) Inventor: Wilhelm, Michael, 71665 Vaihingen/Enz 3 (DE); Reemtsma, Jan-Hinnerk, Dr.rer.nat., 70825 Korntal-Münchingen (DE)
(74) Representative: Brose, Gerhard, Dipl.-Ing.

(57) **Abstract**

To reduce the number of transmission lines (7), which are permanently leased by a service provider of a mobile network (1) from the network operator, or to reduce their bandwidth, those base stations (2) of the network (1) which still have free leased lines (7) available, are used first for the setup of a new connection with the network (1), for a handover within the network (1), or for macro diversity connections within the network (1), and only if all leased lines (7) useable for the new connection setup are utilized, additional switched lines (8) of the network operator are added. The switching of the additional lines (8) is controlled by at least one corresponding management unit (9) of the service provider.

## Description

### Background of the Invention

The invention relates to a method for reducing the number of lines which are permanently leased from a network operator by the service provider of a mobile communications network, or to reduce the bandwidth of the leased lines. The invention furthermore relates to a management module suitable for implementing this method and to a mobile communications network with transmission lines which are partly permanently leased by the provider and partly added on as required.

Most mobile or fixed providers use transmission lines leased from the network operator, so-called "leased lines," to establish the connections between the individual nodes within their networks. These leased lines are a significant part of the total operating costs. To reduce these costs, the service provider can either use its own, i.e., self-installed, lines or add additional network operator lines (so-called "switched lines") for a fee as required.

WO 98/45998 proposes to reduce the number of leased lines by using public lines in addition to the leased lines whenever the latter are overloaded or there is trouble with the lines. The switching of the lines, however, remains under the control of the network operator.

U.S. patent 5,483,589 furthermore provides for a control device to decide whether a connection to a public telephone network via leased lines is allowed.

### Summary of the Invention

In contrast, it is an object of the invention further to develop a method of the initially defined type so as to reduce the service provider's operating costs for transmission lines and to provide a network and management module therefor.

This object is attained by the initially defined method in that, for the setup of a new connection with the network, for a handover within the network, or for macro diversity connections within the network, those base stations of the network which still have free leased lines available are used first and that only if all leased lines usable for the new connection setup are utilized, additional network operator lines or so-called "switched lines" are added.

According to the invention, the majority of the permanently leased lines are replaced by switched lines as required. The bandwidth of the remaining leased lines is reduced to a reasonable value, for example to the average load instead of the current peak load. Additional lines are added only if the actually required bandwidth exceeds this value. Before these additional lines are added, all usable leased lines should be utilized for transmissions.

In a handover of a mobile station, the call, if possible, is switched to a base station that does not require an additional switched line for the call. This applies, in particular, to those networks in which mobile stations that are in a so-called macro diversity state can be simultaneously connected to several base stations. In this case, the request of a mobile station, which is already connected to a base station and wants to establish a macro diversity state by connecting to additional base stations, is rejected if this access would require an additional switched line. The network tries to reduce the number of connections that support macro diversity so as to minimize the number of additional switched lines.

An advantage compared to the method known from WO_98/45998 is that control over the add-on and release of additional lines does not have to be with the network operator, but can be with the service provider (mobile operator). Additional advantages for the service provider are, for example:
the number and the cost of permanently leased lines is reduced;
the cost and performance of the lines can be controlled by the service provider (mobile operator) of the leased lines;
the cost in a handover initiated by the network is reduced, particularly in the UMTS (Universal Mobile Telecommunications System);
the bandwidth in the network is highly adaptive - cost efficient support of packet data services.

Preferably, existing and/or newly to be established connections are checked for a priority feature and are interrupted or rejected if the priority feature is absent. Such a priority feature can be, for example, whether an existing connection is a macro diversity connection and thus can possibly be disconnected.

A newly established connection, a handover, or a macro diversity connection can also be rejected, respectively, as a function of the utilization of the leased lines if this connection would require an additional switched line. For if the utilization rate of the network is low, it is likely that a leased line can be used at a later instant.

To transmit packet data, the bit rate at which the data on a switched line is transmitted should be the maximum possible rate to utilize the switched line as quickly as possible.

To implement the described method, the initially defined network, according to the invention, is provided with a management unit of the service provider, which controls the add-on of switched lines.

Additional advantages of the invention will become evident from the description and the drawing. Furthermore, the aforementioned features and those listed below according to the invention can be used either alone or several together in any combination. The embodiments shown and described are not to be construed as a conclusive list, but are exemplary in character and serve to describe the invention.

### Brief Description of the Drawing

The invention will now be described with reference to the accompanying drawing, wherein:
Fig. 1 is a schematic representation of an exemplary embodiment of a mobile network with two management units according to the invention;
Fig. 2 is a first flow diagram of a program executed in a management unit if a handover takes place within the network and/or a line (so-called "switched line") is added on; and
Fig. 3 is a different, second flow diagram of a program executed in the management unit during a handover.

### Detailed Description of the Invention

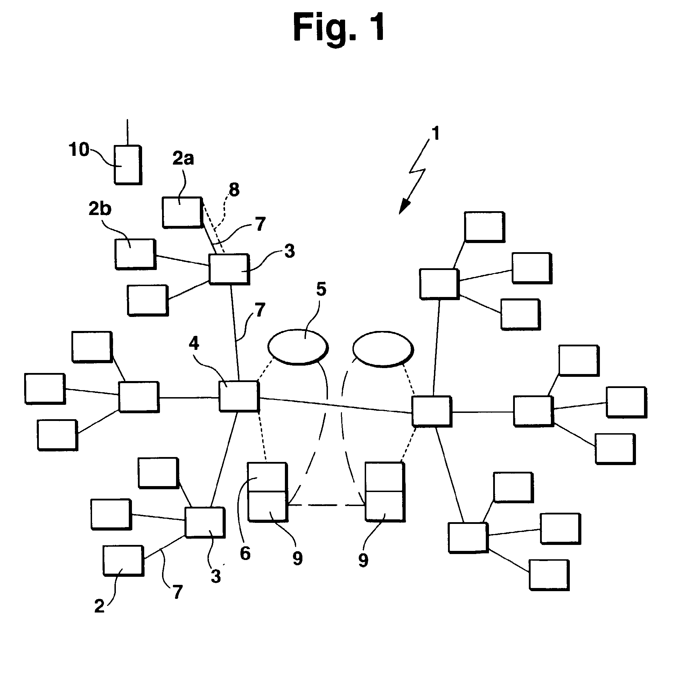

Fig. 1 shows a mobile network 1, which is known per se (e.g. a GSM network), with base stations 2, with base station controllers 3 controlling these base stations 2 and with two mobile switching centers 4 between the two base station controllers 3. Each mobile switching center 4 has a CC/BC unit (CallControl/BearerControl) 5. In addition, an operation and maintenance center 6 of the network operator is connected to each mobile switching center 4.

With the exception of the connections to units 5, 6 indicated by a dashed line, all connections between the individual components of network 1 initially take place only via lines 7 of the network operator, which are permanently leased by the actual service provider. Typically, such lines 7 have a bandwidth of 2Mb/s and cost several thousand euros per month and per kilometer. The number of leased lines 7, or their bandwidth, is selected to be lower than actually required for peak utilization of network 1. Only if a greater number of lines or a greater bandwidth is required during peak utilization, additional switched lines 8 must be added on. To keep the cost for the use of lines 7, 8 as low as possible, at least one intelligent SLRM unit 9 (SLRM: Switched Line Resource Management) of the service provider is provided in network 1, which optimally utilizes the permanently leased lines 7 and keeps the number of switched lines 8 as low as possible. For this purpose, management unit 9 is connected with CC/BC unit 5 as well as with the mobile switching center 4 via the operation and maintenance center 6. Management unit 9, based on the actual load distribution of network 1, adds on or releases additional switched lines 8, which can be accomplished either by standard signaling or by direct requests to the network operator. Management unit 9 is preferably installed in areas where experience shows traffic fluctuations to be high.

If a handover of a mobile station 10 is required, management unit 9 switches the call to a base station 2 that does not require an additional switched line 8 for the call. If in Fig. 1 an additional switched line 8 would have to be added for a handover to base station 2a, the handover would instead be executed to base station 2b if a leased line 7 could be used for this purpose.

In networks, in which mobile station 10 can be simultaneously connected to several base stations (a "macro diversity state"), particularly if utilization of network 1 is high, management unit 9 will both prevent mobile station 10 from being connected to a further base station 2 and will also interrupt existing macro diversity connections in order to make leased line 7 available for new connections. Management unit 9 will always try to reduce the number of switched lines 8 and thus reduce the cost incurred by the service provider. Management unit 9 will also ensure that the transmission rate during transmission via additional switched lines 8 will be the maximum rate, particularly for packet data services.

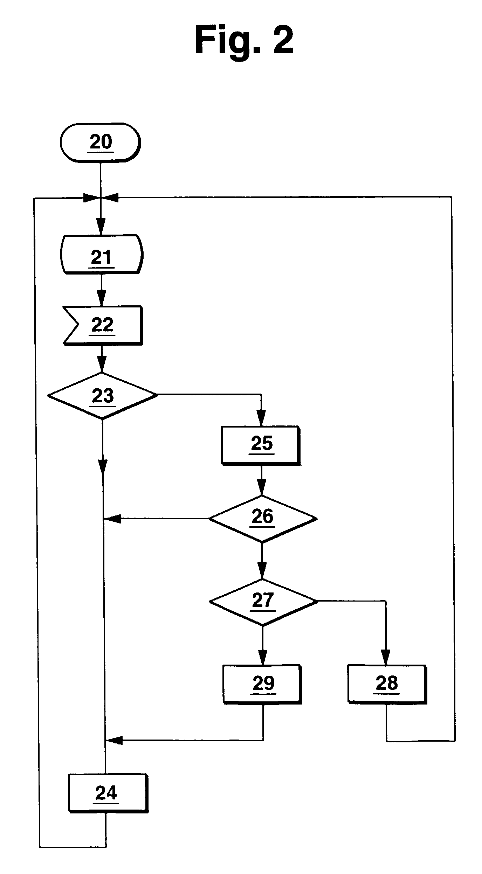

Fig. 2 shows a flow diagram of a program that is executed in network 1 during a handover. After program start (step 20), network 1 is in an IDLE state (step 21), ready for registering new mobile stations 10. If mobile station 10 is to be newly connected, e.g., in a handover to a base station 2 of network 1 (step 22), step 23 first verifies whether an additional switched line 8 is required for this purpose. If the answer is no, the handover is allowed in step 24 and the program goes back to step 21. If it is determined in step 23 that an additional line 8 is required for the handover, step 25 first attempts a handover with a different base station 2 that can be used for this purpose. If the handover with a different base station is successful (step 26) the program goes to step 24. If in step 26 the handover with another base station is unsuccessful, the program goes to step 27, which queries whether a load reduction in the network is expected. If the answer is yes, the program goes to step 28 in which the mobile station is initially rejected and the program jumps back to step 21. Only if the answer in step 27 is no, a new line 8 is added in step 29 and the handover is accepted in step 24.

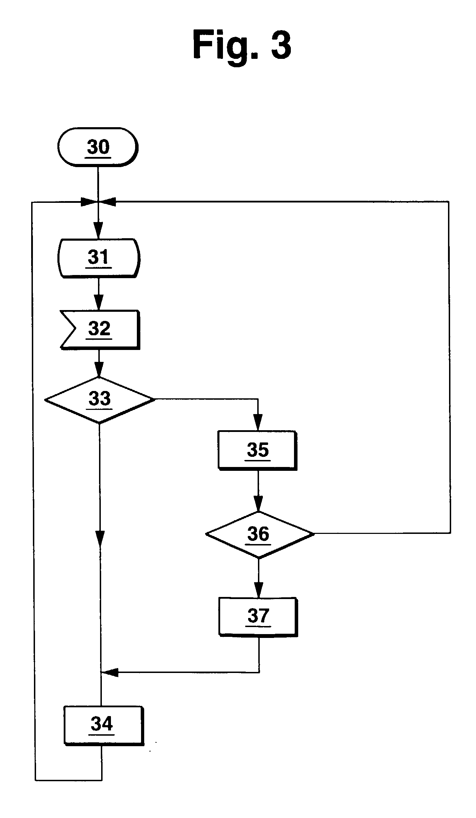

The flow diagram in Fig. 3 shows a different program, which during a handover is executed in management unit 9 either as an alternative or in addition to the program according to Fig. 2. After program start (step 30), the network is in an IDLE state (step 31) ready for registering new mobile stations. If it is determined in step 32 that a mobile station has left the network, step 33 checks whether switched line 8 can now be released. If the answer is yes, this line 8 is released in step 34 and the program goes back to IDLE (step 31). If the answer in step 33 is no, the program goes to step 35 to check the situation for a handover. It then checks in step 36 whether capacity can be freed for the handover, e.g., by interrupting existing macro diversity connections. If "No" the program goes back to IDLE (step 31). If "Yes," the free capacity is created, the handover is executed (step 37) and a possibly superfluous line 8 is released in step 34.

To reduce the number of lines 7 which are permanently leased from a network operator by a provider of a mobile network 1, or to reduce their bandwidth, those base stations 2 of network 1, which still have free leased lines 7 available, are used first for the setup of a new connection with network 1, for a handover within network 1, or for macro diversity connections within network 1, and only if all leased lines 7 usable for the new connection setup are utilized, additional switched lines 8 of the network operator are added. The switching of additional lines 8 is controlled by at least one management unit 9 of the service provider.

## Claims

1. A method for reducing the number of lines which are permanently leased from a network operator by the service provider of a mobile communications network (1), or reducing the bandwidth of such leased lines (7), said method comprising the steps of:
for the set up of a new connection with the network (1), for a handover within the network (1), or for macro diversity connections within the network (1), first using those base stations (2, 2a, 2b) of the network (1) which still have free leased lines (7) available, and only if all leased lines (7) usable for the new connection setup are utilized, adding additional switched lines (8) of the network operator.

2. A method according to Claim 1 characterized in that existing or newly established connections are checked for a priority feature (preference feature) and, if such priority feature is absent, the connection setup is interrupted or rejected.

3. A method according to Claim 1, characterized in that a connection to be newly set up, a handover, or a macro diversity connection is respectively rejected as a function of the utilization degree of the leased lines (7) if an additional switched line (8) is required for this new connection.

4. A method according to Claim 1, characterized in that for transmitting packet data, the bit rate at which this data is transmitted on a switched line (8) is selected to be as high as possible.

5. A mobile communications network (1) with transmission lines (7, 8) which are partly permanently leased by the service provider and partly added on as required, with base stations (2, 2a, 2b) for a connection with mobile stations (10), wherein:
for the setup of a new connection with the network (1), for a handover within the network (1), or for macro diversity connections within the network (1), at least one management unit (9) of the service provider provided in network (1), which controls the adding and releasing of additional lines (8), first uses those base stations (2, 2a, 2b) of the network (1) which still have free leased lines (7) available, and only if all leased lines (7) usable for the new connection setup are utilized, adding additional switched lines (8) of the network operator.

6. A management unit (9) for a mobile communications network (1) with transmission lines (7, 8) which are partly permanently leased by the service provider and partly added on as required and with base stations (2, 2a, 2b) for a connection with mobile stations (10) **characterized in that**
the management unit (9) controls the adding and releasing of switched lines (8) such that, for the setup of a new connection with the network (1), for a handover within the network (1), or for macro diversity connections within the network (1), it first uses those base stations (2, 2a, 2b) of the network (1) which still have free leased lines (7) available, and only if all leased lines (7) usable for the new connection setup are utilized, it adds additional switched lines (8) of the network operator.
